Europäisches Patentamt

European Patent Office

Office européen des brevets

(19)

(11) EP 0 933 197 A2

(12) EUROPEAN PATENT APPLICATION

(43) Date of publication:
04.08.1999 Bulletin 1999/31

(51) Int Cl.$^6$: B32B 27/08

(21) Application number: 99300593.3

(22) Date of filing: 27.01.1999

(84) Designated Contracting States:
AT BE CH CY DE DK ES FI FR GB GR IE IT LI LU
MC NL PT SE
Designated Extension States:
AL LT LV MK RO SI

(30) Priority: 29.01.1998 JP 1679198
11.03.1998 JP 5984998
06.04.1998 JP 9361698

(71) Applicant: Sumitomo Chemical Company,
Limited
Chuo-ku Osaka 541-8550 (JP)

(72) Inventors:
• Togashi, Masao
  Tokyo (JP)
• Satoh, Jun
  Ichihara-shi, Chiba (JP)
• Fujita, Harunori
  Ichihara-shi, Chiba (JP)

(74) Representative: Woods, Geoffrey Corlett et al
J.A. KEMP & CO.
14 South Square
Gray's Inn
London WC1R 5LX (GB)

(54) Process for producing fused polyolefin laminates

(57) A process for producing a fused polyolefin laminate which comprises laminating at least two laminates and radiofrequency sealing them, wherein said laminates are the same or different and comprise at least two outside layers having an intermediate layer therebetween, the intermediate layer of the laminate comprising an ethylene-ethylenically unsaturated ester copolymer (A), and the at least two outside layers, being the same or different, comprising an ethylene homopolymer (B1) or an ethylene-α-olefin copolymer (B2), or comprising a propylene-α-olefin random copolymer (B3) or a propylene block copolymer (B4), and the ratio of the sum of thickness of the at least two outside layers to the thickness of the intermediate layer is about 1:0.2 to 1:50.

**Description**

BACKGROUND OF THE INVENTION

FIELD OF THE INVENTION

The present invention relates to a process for producing a fused polyolefin laminate, a polyolefin laminate and a bag obtained from said fused laminate.

DESCRIPTION OF RELATED ART

Films made of vinyl chloride resins are possible to be processed by radiofrequency sealing in which the films are fused by giving an electromagnetic field. The radiofrequency sealing does not require an external heat source because of its mechanism that the molecular motion of polar molecules caused by the action of electromagnetic field generates the frictional heat, which fuses films. Therefore, it has an advantage that the safety of the sealing work can be assured. There may be some problems, however, that vinyl chloride resins generate hydrogen chloride gas on burning.

In recent years, from the viewpoint of global environment protection, there is a tendency of using, in place of vinyl chloride resins, polyolefin films that do not generate hydrogen chloride gas. The conventional polyolefin films, however, have disadvantages that they are inferior not only in radiofrequency sealing performance but also in scratching resistance, flexibility, blocking resistance, transparency and impact resistance, as compared with films composed of vinyl chloride resins. Therefore, improvement thereof has earnestly been demanded.

JP-A-55-93451 discloses laminate films in which a radiofrequency sealing property is imparted by using an ethylene-vinyl acetate copolymer as a surface layer. According to this document, sealing is performed by directly fusing the ethylene-vinyl acetate resin containing polar molecule by means of exothermic heat caused by high frequency.

Problems such as deterioration of surface scratching resistance and blocking resistance may occur by use of ethylene-vinyl acetate resins as the surface layer.

As the results of extensive studies for obtaining laminates not having these problems, the present inventors have found that laminates having specific olefin resins and not containing polar molecules in the surface layer can be fused together by radiofrequency sealing and that the obtained fused laminates are excellent in providing a balance among the properties of scratching resistance, flexibility, blocking resistance, transparency and impact resistance. In this way, the inventors have completed the present invention.

SUMMARY OF THE INVENTION

The present invention provides aprocess for producing a fused polyolefin laminate which comprises laminating at least two laminates and radiofrequency sealing them, wherein said laminates comprise at least two outside layers having an intermediate layer therebetween, said intermediate layer in said laminates comprising an ethylene-ethylenically unsaturated ester copolymer (A), said at least two outside layers being the same or different and comprising an ethylene homopolymer (B1) or an ethylene-$\alpha$-olefin copolymer (B2), and the ratio of the sum of thickness of said at least two outside layers to the thickness of the intermediate layer is from about 1:0.2 to 1:50.

DETAILED DESCRIPTION OF THE INVENTION

The present invention is described below in detail, as an aid to those desiring to practice the instant invention. The same is not, however, limitive to present invention, since those of ordinary skill in the art will realize that various changes can be made to the embodiments disclosed herein, without departing from the spirit or scope of the present inventive discovery. Instead, the present invention is only to be limited by the scope of the claims appended hereto and their equivalents.

The polyolefin laminate according to the present invention is a laminate having at least three layers including at least two outside layers and an intermediate layer therebetween. The term laminate is intended to include both films and sheets.

The intermediate layer of the laminate is a layer comprising an ethylene-ethylenically unsaturated ester copolymer (A). The ethylenically unsaturated ester in the ethylene-ethylenically unsaturated ester copolymer (A) includes, for example, vinyl acetate and $\alpha,\beta$-unsaturated carboxylic acid alkyl esters.

The $\alpha,\beta$-unsaturated carboxylic acid alkyl esters include alkyl esters of unsaturated carboxylic acids having 3 to 8 carbon atoms, for example, acrylic acid, methacrylic acid or the like. Specific examples thereof include methyl acrylate, ethyl acrylate, n-propyl acrylate, isopropyl acrylate, n-butyl acrylate, t-butyl acrylate, isobutyl acrylate, methyl methacrylate, ethyl methacrylate, n-propyl methacrylate, isopropyl methacrylate, n-butyl methacrylate, t-butyl methacrylate, isobutyl methacrylate and the like.

Among these , particularly preferred are vinyl acetate, methyl acrylate, ethyl acrylate, n-butyl acrylate and methyl methacrylate.

The ethylene-ethylenically unsaturated ester copolymer has preferably about 60 to 95% by weight of ethylene units and about 40 to 5% by weight of ethylenically unsaturated ester units, and more preferably about 70 to 90% by weight of ethylene units and about 30 to 10% by weight of ethylenically unsaturated ester units.

The outside layers of the laminate are layers comprising an olefin resin (B).

The olefin resin (B) is a resin having an olefin as the main component, and includes, for example, olefin homopolymers such as polyethylene, polypropylene, polybutene-1, poly-4-methylpentene-1 and the like ; ethylene-$\alpha$-olefin copolymer; propylene-$\alpha$-olefin random copolymer such as propylene-butene-1 copolymer, propylene-ethylene-butene-1 copolymer and the like ; propylene block copolymer and the like. In addition, there are included copolymers of the above-described $\alpha$-olefin with a poly-unsaturated compound such as a conjugated diene or unconjugated diene. These can be used independently or in combination.

As the olefin resin (B), preferred are an ethylene homopolymer (B1), an ethylene-$\alpha$-olefin copolymer (B2), an propylene-$\alpha$-olefin random copolymer (B3) described below and a propylene block copolymer (B4) described below.

The ethylene-$\alpha$-olefin copolymer (B2) described above is a copolymer of ethylene with one or more $\alpha$-olefin. The $\alpha$-olefin is preferably $\alpha$-olefin having 3 to 12 carbon atoms. Specific examples include propylene, butene-1, pentene-1, hexene-1, heptene-1, octene-1, nonene-1, decene-1, dodecene-1, 4-methylpentene-1, 4-methylhexene-1, vinylcyclohexane, vinylcyclohexene, styrene, norbornene, butadiene, isoprene and the like.

The ethylene-$\alpha$-olefin copolymer can be obtained from the above described monomer and co-monomer by solution polymerization, slurry polymerization, high pressure ion polymerization or gas-phase polymerization by using a Zieglar-Natta catalyst or a metallocene catalyst.

The above-described ethylene-$\alpha$-olefin copolymer can be produced by using a catalyst containing a transition metal compound. A preferred copolymer is one produced in the presence of a catalyst containing a transition metal compound having a group with a cyclopentadiene type anion skeleton. The transition metal compound is a so-called metallocene compound and is normally represented by the general formula: $ML_aX_{n-a}$ (wherein M is a transition metal atom of the group 4 or lanthanide series in the periodic table of elements; L is a group having a cyclopentadiene type anion skeleton or a group having a heteroatom and at least one is a group having a cyclopentadiene type anion skeleton, wherein plurality of L's may be bridged with each other; X is a halogen atom, a hydrogen atom or a hydrocarbon group having 1 to 20 carbon atoms; n represent the valency of the transition atom; and a is an integer represented by $0<a\leqq n$), and can be used independently or in combination thereof.

In addition, said catalyst may be used as a combination of the metallocene compound with an organic aluminum compound including almoxane and/or an ionic compound such as trityl borate, anilinium borate and the like, and/or particulate carrier including inorganic carrier such as $SiO_2$, $Al_2O_3$ and the like, and an organic polymer carrier such as a polymer of an olefin, for example, ethylene, styrene and the like.

On the other hand, when much importance is attached to transparency and flexibility, the ethylene-$\alpha$-olefin copolymer is preferably produced in the presence of a catalyst comprising a solid catalyst component containing a transition metal and an organic aluminum compound at a temperature of from 30 to 300°C under from atmospheric pressure to 3,000 kg/cm$^2$, in the presence or absence of a solvent and in vapor-solid, liquid-solid or homogeneous liquid phase. The process for production in this case is preferably the high pressure ion polymerization.

It is preferred that a ratio of weight average molecular weight (Mw)/ number average molecular weight (Mn) as measured by GPC of the ethylene homopolymer (B1) or ethylene-$\alpha$-olefin copolymer (B2) used in the present invention is preferably 1.8 to 3.5, more preferably 1.8 to 2.5 and most preferably 1.8 to 2.2. Too large of a Mw/Mn ratio may result in deterioration of scratching resistance.

In addition, it is preferred that the ethylene homopolymer (B1) or ethylene-$\alpha$-olefin copolymer (B2) is one having the following properties of (1) to (2):

(1) Melt flow rate (MFR): 0.1 to 50 g/10 minutes, and
(2) Density (d): 0.880 to 0.940 g/cm$^3$.

The ethylene homopolymer (B1) or ethylene-$\alpha$-olefin copolymer (B2) has a density preferably of 0.890 to 0.935 g/cm$^3$ and more preferably of 0.895 to 0.930 g/cm$^3$ and melt flow rate (MFR) preferably of 0.3 to 20 g/10 minutes, more preferably of 0.5 to 10 g/10 minutes and most preferably of 0.8 to 5 g/10 minutes.

The density herein of the ethylene homopolymer (B1) or ethylene-$\alpha$-olefin copolymer (B2) is a value measured according to the method provided in JIS K6760-1981.

The melt flow rate of the present invention is a value measured according to the method provided in JIS K6760-1981 under conditions including the load of 2.16 kg and the measuring temperature of 190°C.

The propylene-α-olefin random copolymer (B3) used in the present invention is preferably a propylene-α-olefin random copolymer (B3-1) or a propylene-ethylene-a-olefin random copolymer (B3-2). In addition, the copolymer has the following properties of (1) to (3):

(1) A content of α-olefin having not less than 4 carbon atoms of about 8 to 35% by mole,
(2) A content of ethylene unit of about 5% by mole or less, and
(3) A cold xylene-soluble part of about 0.1 to 70% by weight.

The α-olefin described above includes α-olefin having 4 to 10 carbon atoms such as butene-1, pentene-1, hexene-1, 4-methylpentene-1, octene-1 and so on and they are used independently or in combination thereof. When the gas-phase polymerization is carried out, butene-1 is preferred which allows higher partial pressure due to its difficult liquefiability.

The content (1) of α-olefin unit having not less than 4 carbon atoms of the propylene-α-olefin random copolymer (B3) used in the present invention is preferably about 10 to 25% by mole.

The content (2) of ethylene unit of the propylene-α-olefin random copolymer (B3) used in the present invention is preferably about 3% by mole or less.

The cold xylene-soluble part (3) (hereinafter, may be referred to as CXS) of the propylene-α-olefin random copolymer (B3) used in the present invention is preferably about 1 to 50% by weight.

The propylene block copolymer (B4) used in the present invention is preferably a block copolymer (B4) which is obtained by forming about 40 to 85% by weight, based on the total polymerization amount (sum of the component b1 and the component b2 described below), of a propylene-ethylene copolymer component (component b1) having a content of ethylene unit of about 1.5 to 6.0% by weight in the first step and then forming about 15 to 60% by weight, based on the total polymerization amount (sum of the component b1 and the component b2), of a propylene-ethylene copolymer component (component b2) having a content of ethylene unit of about 7 to 17% by weight in the second step, and having an intrinsic viscosity ([η]2) of the component b2 of about 2 to 5 dl/g and a ratio ([η]2/[η]1) of the intrinsic viscosity ([η]2) the component b2 to an intrinsic viscosity ([η]1) of the component b1 of about 0.5 to 1.8.

The propylene block copolymer (B4) described above is a copolymer obtained by sequentially polymerizing the propylene-ethylene copolymer part (component b1) in the first step and the propylene-ethylene copolymer part (component b2) having a different content of ethylene unit in the second step, and is a kind of blend copolymer, not a typical block copolymer in which a terminal of a copolymer and a terminal of another copolymer is combined by a bond. The above described propylene block copolymer is also called impact-resistant propylene copolymer.

Particularly, a polymer in which the content of ethylene unit in the component b1 is about 2.5 to 4.5% by weight is preferred from the viewpoint of the balance between flexibility and transparency.

Particularly, a polymer in which the content of ethylene unit in the component b2 is about 8 to 15% by weight is preferred from the viewpoint of the balance between low temperature impact resistance and transparency.

The content of ethylene unit is measured by $^{13}$C-NMR method according to the description in Kobunshi Handobukku (Handbook of High Polymer), p. 616, (1995, issued by Kinokuniya).

The content (E1) of ethylene unit of the component b1 is measured by sampling the copolymer after the polymerization reaction in the first step.

The content (E2) of ethylene unit of the component b2 is measured by sampling the block copolymer after the polymerization reaction in the second step, measuring the content (E12) of ethylene unit of the block copolymer, and calculating according to the following equation based on the proportion (P1) of the component bl and the proportion (P2) of the component b2.

$$E1 \times P1/100 + E2 \times P2/100 = E12$$

$$E2 = (E12 - E1 \times P1/100) \times 100/P2$$

The ratio of the propylene-ethylene copolymer part (component b1) polymerized in the first step and the propylene-ethylene copolymer part (component b2) polymerized in the second step is that the component b1 is about 40 to 85% by weight, preferably about 55 to 83% by weight, and the component b2 is about 15 to 60% by weight, preferably about 17 to 45% by weight.

In order to obtain a propylene-ethylene block copolymer containing particularly about 17 to 45% by weight of the component b2, it is possible to form in the polymerization step a block copolymer containing about 17 to 45% by weight of the component b2. Alternatively, it is also possible to form a block copolymer containing about 27 to 60% by weight of the component b2 by polymerization and then additionally combining the component b1 alone during kneading to adjust the ratio of the component b2.

It is preferred, from the viewpoint of transparency, that the intrinsic viscosity ([η]2) of the component b2 in the propylene block copolymer used in the present invention is about 2 to 5 dl/g and the ratio ([η]2/[η]1) of the intrinsic viscosity ([η]2) of the component b2 to the intrinsic viscosity ([η]1) of the component b1 is about 0.5 to 1.8. Particularly, when the intrinsic viscosity ([η]2) of the component b2 in the propylene ethylene copolymer is about 2.5 to 4.0 dl/g, it is preferred from the viewpoint of the balance between the suppression of low molecular weight components and processability.

Particularly, the ratio [η]2/[η]1 of about 0.8 to 1.5 is preferred from the viewpoint of transparency.

The intrinsic viscosity is measured at 135°C in Tetraline by using Ubbellohde viscometer.

The intrinsic viscosity ([η]1) of the component b1 is measured by sampling the copolymer after the polymerization reaction of the component b1 in the first step.

The intrinsic viscosity ([η]2) of the component b2 is measured by sampling the block copolymer after the polymerization reaction in the second step, measuring the intrinsic viscosity ([η]12) of the block copolymer, and calculating according to the following equation based on the proportion (P1) of the component b1 and the proportion (P2) of the component b2.

$$[\eta]1 \times P1/100 + [\eta]1 \times P1/100 = [\eta]12$$

$$[\eta]2 = ([\eta]12 - [\eta]1 \times P1/100) \times 100/P2$$

In order to suppress the extracting amount by n-hexane or the like, it is preferred that the content of a component having a weight average molecular weight of 26,000 in 20°C xylene-soluble part in the propylene block copolymer (B4) used in the present invention is 6% by weight or less. Particularly, when the product is used as a packing material for foods, it is preferred that the content of a component having a weight average molecular weight of 26,000 or less in 20°C xylene-soluble part in the whole copolymer is about 3.5% by weight or less.

From the viewpoint of the balance between transparency and low temperature impact resistance, it is preferred that the difference (E2 - E1) between the content (E2) of ethylene unit in the component b2 and the content (E1) of ethylene unit in the component b1, in the propylene block copolymer (B4) used in the invention, is within a range of about 3 to 15% by weight, and it is particularly preferred that the difference (E2 - E1) is within a range of about 5 to 10% by weight.

The propylene-α-olefin random copolymer (B3) used in the present invention can be produced by any method of solution polymerization in which the polymerization is carried out in a solvent or gas phase polymerization in which the polymerization is carried out in a gas phase as the method for polymerization, by using a so-called Zieglar-Natta catalyst, which is a known catalyst for stereoregular polymerization of α-olefin, that is a catalyst comprising a compound of a transition metal of the group IV to VIII in the periodic table of elements, an organic compound of the typical metal of the group I or II in the periodic table of elements and preferably the third component comprising a electron donative compound as the catalyst system. For example, the copolymer can be obtained by a method of production as described in JP-A-63-19255 (Example 1), or JP-A-60-76515.

The propylene block copolymer (B4) used in the present invention can be produced, for example, by a batch system polymerization method in which the component b1 is polymerized in the presence of a Zieglar-Natta catalyst and then subsequently the component b2 is polymerized. Alternatively, it can also be produced by a continuous system polymerization method in which the component b1 and the component b2 are continuously polymerized in polymerization vessel comprising at least two vessels.

Specifically, for example, the copolymer can be produced by a method in which, as the first step, the propylene-ethylene copolymer part (component b1) is formed by feeding propylene, ethylene and hydrogen for molecular weight adjustment in the presence of a Zieglar-Natta type catalyst containing at least titanium, magnesium and a halogen as the essential component at a molar ratio: Al atom in the component (b)/Ti atom in the component (a) of about 1 to 2,000, preferably about 5 to 1,500, and a molar ratio of the component (c)/Al atom in the component (b) of about 0.02 to 500, preferably about 0.05 to 50, under conditions including a polymerization temperature of about 20 to 150°C, preferably about 50 to 90°C, and a polymerization pressure of from atmospheric pressure up to about 40 kg/cm²G, preferably from about 2 to 40 kg/cm²G, and then, subsequently, as the second step, the propylene-ethylene copolymer part (component b2) is formed by feeding propylene, ethylene and hydrogen, wherein said Zieglar-Natta type catalyst comprises the following components (a), (b) and (c), or (a') and (b').

(a) a trivalent titanium containing solid catalyst component obtained by treating a solid product with a mixture of an ester compound and ether compound with titanium tetrachloride, wherein said solid product is obtained by reducing a titanium compound and/or an ether compound, represented by the general formula: $Ti(OR^1)_nX_{4-n}$ (wherein $R^1$ is a hydrocarbon group having 1 to 20 carbon atoms, X is a halogen atom, and n is an integer represented by $0<n\leqq4$), with an organic magnesium compound in the presence of an organic silicon compound having a Si-O bond ,

(b) an organic aluminum compound, and

(c) a catalyst system comprising a silicon compound having a Si-$OR^2$ (wherein $R^2$ is a hydrocarbon group having 1 to 20 carbon atoms); or

(a') a hydrocarbyloxy group-containing solid catalyst component obtained by treating hydrocarbyloxy group containing solid product which is a hydrocarbon solvent-insoluble with ethylene for pre-polymerization, and then treating the product in a slurry state in a hydrocarbon solvent at a temperature of 80 to 100°C in the presence of an ether compound and a titanium tetrachloride, wherein said solid compound is obtained by reducing a titanium compound, represented by the general formula: $Ti(OR^1)_nX_{4-n}$ (wherein $R^1$ is a hydrocarbon group having 1 to 20 carbon atoms, X is a halogen atom, and n is an integer represented by $0<n=4$), with an organic aluminum compound represented by the general formula: $AlR^2{}_mY_{3-m}$ (wherein $R^2$ is a hydrocarbon group having 1 to 20 carbon atoms, Y is a halogen atom, and m is an integer represented by $1<m=3$), and

(b') a catalyst system comprising an organic aluminum compound, or the like.

The flowability represented by, for example, melt flow rate of the propylene-$\alpha$-olefin random copolymer (B3) or a propylene block copolymer (B4) used in the present invention can be changed by the known method in the presence or absence of an organic peroxide.

The propylene-$\alpha$-olefin random copolymer (B3) or a propylene block copolymer (B4) can be used in a blend with an ethylene resin, a non-crystalline polyolefin, a petroleum resin or its hydrogenation product, recycle product thereof and the like, insofar as the effect of the invention is not inhibited.

The ethylene resin includes, for example, polyethylene, a copolymer of ethylene with an $\alpha$-olefin having not less than 4 carbon atoms.

The non-crystalline polyolefin includes, for example, non-crystalline polypropylene or polybutene-1 and copolymers of propylene or butene-1 with other $\alpha$-olefins. Preferred are non-crystalline olefin polymers having a content of propylene and/or butene-1 of about 50% by weight or more.

It is preferred that these non-crystalline polyolefins have a boiling n-heptane insoluble substance, i. e., Soxhlet extraction residual substance with boiling n-heptane, of about 70% by weight or less, preferably of about 60% by weight or less.

The non-crystalline polyolefin can be used independently or in combination thereof.

The non-crystalline polyolefin includes non-crystalline polyolefin such as polypropylene, polybutene-1, propylene-ethylene copolymer, butene-1-ethylene copolymer, propylene-butene-1 copolymer, propylene-butene-1-ethylene terpolymer, propylene-hexene-1-ethylene terpolymer, butene-1-hexene-1-ethylene terpolymer and the like which have the specific characteristics such as the content of propylene component and/or butene-1 component described above. For example, Ubetac UT2385 or UT2780, manufactured by Ube-rekisen, can be used.

The petroleum resin and hydrogenation product thereof are a thermoplastic resin which is formed by polymerizing and solidifying cracked petroleum generated by thermal decomposition of petroleum and which includes aliphatic resin starting from C5 fraction, aromatic resin starting from C9 fraction, copolymer resin from the both, dicyclopentadiene resin and hydrogenated resin produced by hydrogenation thereof. Specifically, for example, commercially available products such as Highrets or Petrodin, manufactured by Mitsui Chemicals Inc., and Akron manufactured by Arakawa Chemical Industries, can be used.

Among these petroleum resins and hydrogenation products thereof, hydrogenation products are preferred from the viewpoint of color tone and odor.

The process for producing a mixture of the above described propylene-$\alpha$-olefin random copolymer (B3) or a propylene block copolymer (B4) with other resins is not particularly limited and performed according to known methods, for example, by kneading under heating with fusion by using a kneading machine such as kneader, Banbury mixer, rolls and the like or single-screw or twin-screw extruder and so on. Alternatively, pellets of respective resins may be dry-blended.

The propylene-$\alpha$-olefin random copolymer (B3) or a propylene block copolymer (B4) can be combined, if necessary, with various additives or fillers, for example, antioxidant, antifog agent, antistatic agent, nucleating agent, frame retardant and the like.

The intermediate layer and the both outside layers of the present invention can be combined, if necessary, with various other resins insofar as the effect of the invention is not inhibited. For example, high density polyethylene for improvement of rigidity or olefin resin such as low density elastomer or the like for improvement of impact strength can be used independently or in combination thereof.

For the purpose of further improvement of physical properties of the intermediate layer and the at least two outside layers of the present invention, there can be added, if necessary, a phenol stabilizer exemplified by 2,6-di-tert-butyl-p-cresol (BHT), tetrakis[methylene-3-(3,5-di-tert-butyl-4-hydroxyphenyl)propionato]methane (IRGANOX 1010) or n-octadecyl-3-(4'-hydroxy-3,5'-di-tert-butylphenyl)propionate (IRGANOX 1076); a phosphite stabilizer exemplified by bis(2,4-di-tert-butylphenyl)pentaerythritol diphosphite and tris(2,4-di-tert-butylphenyl)phosphite and the like; a lubricant exemplified by higher aliphatic acid amide or higher aliphatic acid ester; an antistatic agent such as glycerol ester or sorbitan ester of aliphatic acid having 8 to 22 carbon atoms, polyethylene glycol ester and the like; a processability improving agent exemplified by metal salt of fatty acid such as calcium stearate; and an anti-blocking agent exemplified by silica, calcium carbonate, talc and the like.

Resin components such as high density polyethylene, low density elastomer and the like and additives such as antioxidants, anti-blocking agents, lubricants, processability improving agents and the like, as combined for various purposes, can be used by subjecting to laminate preparation after previously fusing and kneading, or by subjecting to laminate preparation after making an independent dry blend or by the dry blending of one or more master batches.

The polyolefin laminate used in the present invention has a ratio of thickness, such that the sum of the thickness of the at least two outside layers to the thickness of the intermediate layer is about 1:0.2 to 1:50, preferably about 1:0.5 to 1:20, and more preferably about 1:1 to 1:5. When the ratio is too low, the product may be inferior in flexibility, and when it is too high, the product may be inferior in heat resistance.

The polyolefin laminate used in the present invention has a total thickness preferably of about 40μm or more, more preferably of about 40 to 1,000 μm and most preferably of about 50 to 500 μm.

For the production of the polyolefin laminate used in the present invention, there can generally be adopted techniques such as co-extruding methods, extrusion coating methods (also called extrusion laminating methods) and the like by using an apparatus for producing inflation films, an apparatus for producing T-die films and so on.

It is also possible to manufacture a desired multi-layer film according to conventional methods such as dry laminate methods, wet laminate methods, sand laminate methods, hot melt laminate methods and the like by using multi- or single-layer films obtained with these apparatuses.

The polyolefin laminate of the present invention can be sealed by high frequency. A fused polyolefin laminate can be obtained by fusing polyolefin laminates with each other. The fused products obtained in this manner include products in which a part or whole of the laminates is fused, and generally are used in the making of bags in which part of the laminate is fused.

The polyolefin laminate of the invention is excellent in transparency but it can be colored according to its intended use. In the latter case, all the layers can be colored and/or any specific layer(s), for example, the intermediate layer or the outside layer(s) alone can be colored.

The bag of the present invention comprises the above described olefin laminates and can suitably be produced by subjecting the laminates to radiofrequency sealing, heat sealing and/or stitching.

More preferably, the bag of the invention can suitably be produced by putting the laminates in layers and sealing by high frequency. The conditions for radiofrequency sealing are not particularly limited and suitably decided within the volume of radiofrequency sealing machine conventionally used for vinyl chloride resins.

EXAMPLES

The present invention will now be described in more detail based on Examples, which should not be construed as a limitation upon the invention.

Methods for evaluation in Examples 1 to 3 and Comparative Examples 1 to 4 are described below:

(1) Density (d)
This was measured according to JIS K6760.
(2) Melt flow rate (MFR)
This was measured according to JIS K6760 under a load of 2.16 kg and a temperature of 190°C.
(3) Molecular weight distribution (Mw/Mn)
Measurement with GPC (Gel Permeation Chromatography) was performed by using a GPC measuring apparatus, model: 150C, manufactured by Waters Co., with GMH6-HT, manufactured by Tosoh Co., as a column, and o-dichlorobenzene as a solvent, at 145°C. A calibration curve was obtained in the conventional manner by using standard polystyrene manufactured by Tosoh Co. The molecular weight distribution was calculated as the ratio of weight average molecular weight (Mw) to number average molecular weight (Mn).
(4) Content of vinyl acetate unit
This was obtained on a calibration curve preparing a press sheet and correcting absorbance at the characteristic absorption band in the infrared absorption spectra by film thickness. As the characteristic absorption band, a peak at 609 cm$^{-1}$ of vinyl acetate was used.

(5) Radiofrequency sealing test

A produced film was sealed with a high frequency welder YD2700T, manufactured by Yamamotobinita. Conditions for welding included an air pressure of 2 kg/cm$^2$G, welding delay of 3 seconds, welding time of 4 seconds, cooling time of 2 seconds, voltage of 5,500 V, and tuning control of 5. The size of the sealing bar was 10 mm × 150 mm.

The welded film was cut at an interval of 10 mm in the MD direction to give a test piece. One terminal of the welded part of the test piece was previously peeled and both layers were fixed on cramps of a tensile test machine. The peeled ends of the test piece were pulled at a rate of 100 mm/minute and strength at T-peel was measured.

(6) Transparency

Total haze was measured according to JIS K7105-1981.

(7) Scratching test

The produced film was rubbed with a polyethylene film containing 1,000 ppm of fine-particulate silica by using a shaking tester RECIPRO SHAKER R-10, manufactured by TAITEC Co. for 1 minute. The rate of rubbing resulted from a shaking rate of 120 reciprocal movings/minute and a moving length of 40 mm. Differences in hazes before and after the rubbing test were measured and taken for evaluation of scratching. Total haze was measured according to JIS K7105-1981.

(8) Blocking resistance

Films were put in layers and, after promoting intimate contact under a load of 7 kg/220 cm$^2$ and a temperature of 23°C for 18 hours, they were left in an atmosphere of 23°C under a humidity of 50% for 30 minutes or more. The obtained test sample was subjected to measurement of load (g/100 cm$^2$) required for peeling of the test sample at a loading rate for peeling of 20 g/minute by using a blocking tester manufactured by Shimadzu Co.

(9) Flexibility (1% SM (1% secant modulus))

A film was cut at an interval of 2 cm in the MD direction to give a test piece. The piece was fixed onto a tensile test machine at an interval between chucks of 6 cm, pulled at a rate of 5 mm/minute. A value was calculated according to the stress of 1% elongation by using the following equation: 100 × (stress)/(cross section) [kg/cm$^2$]. A smaller value indicates superior flexibility.

Example 1

A two-element three-layered film was produced by using an ethylene-vinyl acetate copolymer (EVA, Evatate K2010, MFR: 3 g/10 minutes, content of vinyl acetate unit: 25% by weight, manufactured by Sumitomo Chemical Co. Ltd.) as an ethylene-ethylenically unsaturated ester copolymer (A) for the intermediate layer, and an ethylene-hexene-1 copolymer (PE-1, Sumikathen E FV401, density: 0.902 g/cm$^3$, MFR: 4.1 g/10 minutes, Mw/Mn: 2.1, manufactured by Sumitomo Chemical Co. Ltd.) produced by using a metallocene catalyst as an ethylene-$\alpha$-olefin copolymer (B2) for both outside layers, respectively.

Production of a film was conducted by a co-extruding method by using three 30 mm φ extruders. The thickness of layers was 15μm, 70μm, 15μm, respectively and the thickness ratio of the intermediate layer taking the total thickness of the both outside layers as 1 was 2.3. A bag was prepared by a radiofrequency sealing method by using this film. The conditions for bag preparation were the same as those for the radiofrequency sealing test described above. The bag could easily be prepared by sealing three parts of the film. The results of evaluation of the obtained film are shown in Table 1.

Example 2

The procedure in Example 1 was repeated except that an ethylene-hexene-1 copolymer (PE-2, Sumikathen Hi $\alpha$ CW2004, density: 0.909 g/cm$^3$, MFR: 2.1 g/10 minutes, Mw/Mn: 2.3, manufactured by Sumitomo Chemical Co. Ltd.), produced by using a solid catalyst as an ethylene-$\alpha$-olefin copolymer (B2) was used for both the outside layers in Example 1. The results are shown in Table 1. A bag could easily be prepared by radiofrequency sealing method under the same conditions as in Example 1.

Example 3

The procedure in Example 1 was repeated except that an ethylene-hexene-1 copolymer (PE-3, Sumikathen $\alpha$ FZ201-0, density: 0.911 g/cm$^3$, MFR: 2.0 g/10 minutes, Mw/Mn: 3.2, manufactured by Sumitomo Chemical Co. Ltd.), produced by using a solid catalyst as an ethylene-$\alpha$-olefin copolymer (B2) was used for both the outside layers in Example 1. The results are shown in Table 1. A bag could easily be prepared by radiofrequency sealing method under the same conditions as in Example 1.

Comparative Examples 1 - 4

The procedure in Example 1 was repeated except that resins shown in Table 1, which are the same resins used in Examples 1- 3, were used to give single-layered films. The results are shown in Table 1. While a bag could be prepared in Comparative Example 1, no bag could be prepared in Comparative Examples 2 - 4 because the films could not be adhered by radiofrequency sealing machine.

Table 1

| | Constitution of layers | Strength of radiofrequency sealing (g/cm) | Transparency HAZE (%) | Scratching ΔHAZE (%) | Blocking resistance (g/100 cm$^2$) | Flexibility 1% SM (kg/cm$^2$) | Preparation of bag |
|---|---|---|---|---|---|---|---|
| Example 1 | PE-1/EVA /PE-1 | 720 | 0.7 | 6.0 | 140 | 372 | possible |
| Example 2 | PE-2/EVA /PE-2 | 725 | 0.7 | 8.4 | 160 | 363 | possible |
| Example 3 | PE-3/EVA /PE-3 | 655 | 1.3 | 11.8 | 191 | 457 | possible |
| Comparative example 1 | EVA | 895 | 6.5 | 21.4 | 205 | 303 | possible |
| Comparative example 2 | PE-1 | 0 | 2.8 | 5.8 | 143 | 656 | impossible |
| Comparative example 3 | PE-2 | 0 | 1 | 9.2 | 163 | 712 | impossible |
| Comparative example 4 | PE-3 | 0 | 2.2 | 14.8 | 178 | 777 | impossible |

For Examples 4, 5 and Comparative Examples 5 - 7, evaluation were conducted in the following manner:

(1) Proportion of the component b1 and the component b2 in the propylene block copolymer
   The proportion (P1) of the component b1 and the proportion (P2) of the component b2 were calculated from the material balance at the polymerization of the component b1 and the component b2, respectively.

(2) Intrinsic viscosity [η]
   This was measured at 135°C in Tetraline by using Ubbellohde viscometer.
   Intrinsic viscosities ([η]1 and [η]2) of the component b1 and the component b2
   The intrinsic viscosity [η]2 of the component b2 was calculated by the following equation based on the intrinsic viscosity [η]1 measured after the polymerization reaction for the component b1 in the first step, the intrinsic viscosity [η]12 measured after the polymerization reaction in the second step, the proportion of the component b1 and the proportion (P2) of the component b2.

$$[\eta]2 = ([\eta]12 - [\eta]1 \times P1/100) \times 100/P2$$

(3) Content of ethylene unit:
   The content was measured by $^{13}$C-NMR according to the method described in Kobunshi Handobukku (Handbook of High Polymer), p. 615 - 616, (1995, published by Books Kinokuniya).
   The contents (E1, E2) of ethylene unit for the component b1 and the component b2:
   The content (E2) of ethylene unit of the component b2 was calculated by the following equation based on the content (E1) of ethylene unit of the component b1 measured after the formation of the component b1 in the first step, the content (E12) of ethylene unit measured after the formation in the second step, the proportion of the component b1 and the proportion (P2) of the component b2.

$$E2 = (E12 - E1 \times P1/100) \times 100/P2$$

(4) Content of propylene unit and butene-1 unit
   The contents were measured by $^{13}$C-NMR according to the method described in Kobunshi Handobukku (Handbook of High Polymer), p. 615 - 619, (1995, published by Books Kinokuniya).

(5) Melt flow rate (MFR)
   Measurement of MFR for the propylene block copolymer was carried out according to the method according to JIS K7210, Condition-14. That for the polyethylene resin was carried out according to JIS K6760.

(6) Content of vinyl acetate unit
   This was measured by the same evaluation method as the method (4) for Examples 1 - 3 and Comparative Examples 1 - 4.

(7) Radiofrequency sealing test
   This was measured by the same evaluation method as the method (5) for Examples 1 - 3 and Comparative Examples 1 - 4.

(8) Tensile strength at break and tensile elongation at break
   These were measured according to JIS K6781.

(9) 100% elongation strength (flexibility)
   The strength at 100% elongation of distance between chucks was measured in the tensile test according to JIS K6781. A smaller value indicates superior flexibility.

Example 4

A two-elements three-layered film was produced by using an ethylene-vinyl acetate copolymer (EVA) (MFR: 1.5 g/10 minutes, content of vinyl acetate unit: 19.0% by weight , additive: BHT) as an ethylene-ethylenically unsaturated ester copolymer (A) for the intermediate layer, and a propylene-butene-1 random copolymer (PP-1) (content of butene-1: 13% by mole, content of ethylene unit: 0% by mole , cold xylene soluble part: 3.2% by weight, MFR: 4.1 g/10 minutes, additive: calcium stearate, IRGANOX 1010, IRGANOX B220), as a propylene-α-olefin random copolymer (B3) for the both outside layers, respectively.

Production of a film was conducted by a co-extruding method by using three 30 mm φ extruders. The whole thickness of the film was 80 μm. The thickness of layers was 10μm, 60μm, 10μm, respectively, and the thickness of the intermediate layer taking the total thickness of the both outside layers as 1 was 3. A bag was prepared by sealing three parts of the film with a radiofrequency sealing method by using this film. The conditions for bag preparation were the same as those for the radiofrequency sealing test described above. The results of evaluation of the film are shown in Table 2.

Example 5

The procedure in Example 4 was repeated except that a propylene block copolymer (PP-2) (content of ethylene unit in the component b1: 3.5% by weight (5.2% by mole), ratio of the component b1 in the total polymerization: 60% by weight, content of ethylene unit in the component b2: 13% by weight (18% by mole), content of ethylene unit in the total polymerization: 7.3% by weight (10.6% by mole), a propylene-ethylene block copolymer formed by mixing a copolymer having $[\eta]2$ of 3.5 dl/g and $[\eta]2/[\eta]1$ of 1.17 with additives (calciumstearate, IRGANOX 1010, IRGAFOS 165) and carrying out peroxide decomposition on granulation resulting in MFR of 2.7g/10 minutes), produced in the manner described below, as a propylene block copolymer (B4), was used for both the outside layers in Example 4. A bag was prepared by sealing three parts of the film with a radiofrequency sealing method by using the obtained film. The conditions for bag preparation were the same as those for the radiofrequency sealing test described above. The results of evaluation of the film are shown in Table 2.

The propylene block copolymer was produced as follows.

[Synthesis of solid catalyst]

Into a 200 liter reactor made of stainless steel equipped with a stirrer which was purged with nitrogen gas were charged 80 liter of hexane, 6.55 mole of tetrabutoxy titanium, 2.8 mole of di-isobutyl phthalate and 98.9 mole of tetraethoxy silane to form a homogeneous solution. Then, 51 liter of a solution of butyl magnesium chloride in di-isobutyl ether having a concentration of 2.1 mole/liter was gradually dropped over 5 hours keeping at a temperature of 5°C in the reactor . After the completion of addition, the stirring was continued for another 1 hour at 20°C and solids were separated from the solution at 20°C. The former was washed three times with 70 liter of toluene. Then, toluene was added to a slurry concentration of 0.2 kg/liter. After adding 47.6 mole of di-isobutyl phthalate, a reaction was conducted at 95°C for 30 minutes. After the completion of the reaction, solids were separated from the solution and washed twice with toluene. Then, after adding 3.13 mole of di-isobutyl phthalate, 8.9 mole of butyl ether and 274 mole of titanium tetrachloride, a reaction was conducted at 105°C for 3 hours. After the completion of the reaction, solids were separated from the solution at the same temperature and washed twice with 90 liter of toluene at the same temperature. Then, the slurry concentration was adjusted to 0.4 kg/liter. After adding 8.9 mole of butyl ether and 137 mole of titanium tetrachloride, a reaction was carried out at 105°C for an hour. After the completion of the reaction, solids were separated from the solution at the same temperature and washed three times with 90 liter of toluene at the same temperature. Then, the solids were washed three times with 70 liter of hexane and dried under vacuum to give 11.4 kg of a solid catalyst component. The solid catalyst component contained 1.8% by weight of titanium atom, 20.1% by weight of magnesium atom, 8.4% by weight of phthalic acid ester, 0.3% by weight of ethoxy group and 0.2% by weight of butoxy group and had a good granulate form without fine powders.

[Production of polymer]

<Pre-activation of solid catalyst component>

Into a 3 liter autoclave made of stainless steel equipped with a stirrer were charged 1.5 liter of sufficiently dehydrated and degassed n-hexane, 37.5 mmole of triethyl aluminum, 37.5 mmole of tert-butyl-n-propyldimethoxy silane and 15 g of the solid catalyst component described above. The pre-activation was carried out by continuously feeding 15 g of propylene over about 30 minutes keeping at a temperature of 30°C or less in the autoclave. Then, the obtained slurry of solid catalyst was transferred to a 150 liter autoclave made of stainless steel equipped with a stirrer and stored after adding 100 liter of liquid butane.

<Polymerization>

Two fluidized bed reactors made of stainless steel, each having an inner capacity of 1 m$^3$ and equipped with a stirrer, were connected to allow transfer of copolymer between the two reactors. Copolymerization of propylene and ethylene in the first step (for the component b1) was conducted in the first reactor and copolymerization of propylene and ethylene in the second step (for the component b2) was conducted in the second reactor, both continuously.

(1) First reactor (for the component b1)
Copolymerization of propylene and ethylene was carried out at a polymer-holding amount in the fluidized bed of 45 kg by continuously feeding 75 mmole/hour of triethyl aluminum, 7.5 mmole/ hour of tert-butyl-n-propyldimethoxy silane and 0.37 g/hour of pre-activated solid catalyst component into a 1m³ fluidized bed reactor equipped with a stirrer while feeding propylene, ethylene and hydrogen so that a polymerization temperature of 70°C, a polymerization pressure of 18 kg/cm²G, hydrogen concentration in the gaseous phase of 0.25% by volume and ethylene concentration in the gaseous phase of 1.9% by volume were maintained to give 13.2 kg/hour of a copolymer. The obtained copolymer was continuously transferred to the second reactor without deactivation of the catalyst. An aliquot of the copolymer was taken out and analyzed. The result showed a content of ethylene unit of 3.5% by weight and an intrinsic viscosity ($[\eta]1$) in 135°C Tetraline of 3.0 dl/g.

(2) Second reactor (for the component b2)

Copolymerization of propylene and ethylene was continued on the catalyst-containing copolymer transferred from the first reactor at a polymer-holding amount in the fluidized bed of 55 kg in a 1m³ fluidized bed reactor equipped with a stirrer while feeding propylene, ethylene and hydrogen so that a polymerization temperature of 80°C, a polymerization pressure of 12 kg/cm²G, hydrogen concentration in the gaseous phase of 0.35% by volume and ethylene concentration in the gaseous phase of 9.5% by volume were maintained to give 8.8 kg/hour of a white well-fluidized copolymer. The obtained copolymer showed a content of ethylene unit of 7.3% by weight and an intrinsic viscosity ($[\eta]$) in 135°C Tetraline of 3.2 dl/g.

It was calculated from the above results that the ratio of polymerization in the first and second reactors was 60/40, the content of ethylene unit in the component b2 obtained from analysis of the component b1 and final copolymer was 13% by weight and intrinsic viscosity ($[\eta]2$) in 135°C Tetraline was 3.5 dl/g.

The obtained copolymer was decomposed by heating in the presence of peroxide so that MFR is adjusted to 2.7g/10 minutes to give a propylene block copolymer.

Comparative Examples 5 - 7

The procedure in Example 4 was repeated except that resins shown in Table 2, which were the same resins used in Examples 4 and 5, were used to give single-layered films. The results are shown in Table 2. While a bag could be prepared in Comparative Example 7, no bag could be prepared in Comparative Examples 5 and 6 because the films could not be adhered by radiofrequency sealing machine.

Table 2

| | | Strength of radiofrequency sealing (g/cm) | Break point | | 100% Elongation strength (kg/cm²) | Preparation of bag |
|---|---|---|---|---|---|---|
| | | | Tensile strength (kg/cm²) | Tensile elongation (%) | | |
| Example 4 | PP-1/EVA/PP-1 | 620 | 312 | 631 | 77 | possible |
| Example 5 | PP-2/EVA/PP-2 | 144 | 243 | 578 | 78 | possible |
| Comparative example 5 | PP-1 | 0 | 335 | 638 | 93 | imposs ible |
| Comparative example 6 | PP-2 | 0 | 330 | 678 | 81 | impossible |
| Comparative example 7 | EVA | 640< (break down of material) | 200 | 515 | 73 | possible |

As described above, the present invention can provide a process for producing fused laminates having specific olefin resins without polar molecule as the surface layer by radiofrequency sealing.

In addition, the present invention can provide polyolefin laminates which are excellent in the balance among scratching resistance, flexibility, blocking resistance, transparency and impact resistance and which can be sealed with high frequency. Said laminates can suitably used in medical use such as an adhesive plaster after applying a adhesive. In addition, said laminate can suitably used in miscellaneous use such as stationery.

Furthermore, the bag of the present invention can easily be sealed with a radiofrequency sealing apparatus which has conventionally been used for vinyl chloride resins.

**Claims**

1. A process for producing a fused polyolefin laminate which comprises laminating at least two laminates and radiofrequency sealing them, wherein said laminates each comprise at least two outside layers having an intermediate layer therebetween, said intermediate layer comprising an ethylene-ethylenically unsaturated ester copolymer (A), said at least two outside layers being the same or different and comprising an ethylene homopolymer (B1) or an ethylene-α-olefin copolymer (B2), and the ratio of the sum of thickness of said at least two outside layers to the thickness of the intermediate layer is from about 1:0.2 to 1:50.

2. A process for producing a fused polyolefin laminate which comprises laminating at least two laminates and radiofrequency sealing them, wherein each of said two laminates comprise at least two outside layers having an intermediate layer therebetween, said intermediate layer comprising an ethylene-ethylenically unsaturated ester copolymer (A), said at least two outside layers being the same or different and comprising a propylene-α-olefin random copolymer (B3) as described below, or a propylene block copolymer (B4) as described below, and the ratio of the sum of the thickness of said at least two outside layers to the thickness of the intermediate layer is from about 1:0.2 to 1:50;

   the propylene-α-olefin random copolymer (B3) is a propylene-α-olefin random copolymer (B3-1) or a propylene-ethylene-α-olefin random copolymer (B3-2) comprising (1) about 8 to 35% by mole of an α-olefin having not less than 4 carbon atoms, (2) about 5% by mole or less of an ethylene unit and (3) about 0.1 to 70% by weight of a cold xylene-soluble part;
   the propylene block copolymer (B4) is a propylene block copolymer that can be obtained by forming in a first step about 40 to 85% by weight, based on the total polymerization amount (sum of the component b1 and the component b2 described below), of a propylene-ethylene copolymer component (component b1) having an ethylene unit content of about 1.5 to 6.0% by weight, and then forming in a second step about 15 to 60% by weight, based on the total polymerization amount (sum of the component b1 and the component b2), of a propylene-ethylene copolymer component (component b2) having an ethylene unit content of about 7 to 17% by weight, and having an intrinsic viscosity ($[\eta]2$) of the component b2 of about 2 to 5 dl/g and a ratio ($[\eta]2/[\eta]1$) of the intrinsic viscosity ($[\eta]2$) of the component b2 to an intrinsic viscosity ($[\eta]1$) of the component b1 of about 0.5 to 1.8.

3. A process for producing a fused polyolefin laminate according to claim 1, wherein one of said at least two outside layers is a layer comprising an ethylene homopolymer (B1) oranethylene-α-olefincopolymer (B2) and the other of said at least two outside layers is a layer comprising an olefin resin (B), wherein the olefin resin (B) is a resin containing an olefin as a main component thereof.

4. A process for producing a fused polyolefin laminate according to claim 1 or 3, wherein said ethylene homopolymer (B1) or ethylene-α-olefin copolymer (B2) is a homopolymer or a copolymer having a ratio of weight average molecular weight (Mw)/ number average molecular weight (Mn) as measured by GPC of about 1.8 to 3.5.

5. A process for producing a fused polyolefin laminate according to any one of claims 1, 3 and 4, wherein said ethylene-α-olefin copolymer (B2) is a copolymer obtained by a copolymerizing step that occurs in the presence of a catalyst comprising a transition metal compound having a group containing a cyclopentadiene type anion skeleton.

6. A process for producing a fused polyolefin laminate according to any one of claims 1 and 3 to 5 , wherein said ethylene homopolymer (B1) or ethylene-α-olefin copolymer (B2) is a homopolymer or a copolymer having the following properties (1) and (2):

   (1) a melt flow rate (MFR) of 0.1 to 50 g/10 minutes, and
   (2) a density (d) of 0.880 to 0.940 g/cm$^3$.

7. A process for producing a fused polyolefin laminate according to any one of claims 1 and 3 to 6, wherein said laminate is a laminate having a total thickness of about 40 μm or more.

8. A process for producing a fused polyolefin laminate according to claim 2, wherein said laminate is a laminate having a total thickness of about 40 μm or more.

9. A fused polyolefin laminate sealable by high frequency, which comprises:

at least two outside layers having an intermediate layer therebetween, wherein said intermediate layer comprises an ethylene-ethylenically unsaturated ester copolymer (A), said at least two outside layers are the same or different and comprise an ethylene homopolymer (B1) or an ethylene-α-olefin copolymer (B2), and the ratio of the sum of thickness of the at least two outside layers to the thickness of the intermediate layer is about 1:0.2 to 1:50.

10. A fused polyolefin laminate which comprises at least two outside layers having an intermediate layer therebetween, wherein said intermediate layer of said laminate comprises an ethylene-ethylenically unsaturated ester copolymer (A), said at least two outside layers are the same or different, and comprise an propylene-α-olefin random copolymer (B3) as described below or a propylene block copolymer (B4) as described below, and the ratio of the sum of thickness of said at least two outside layers to the thickness of the intermediate layer is about 1:0.2 to 1:50;

the propylene-α-olefin random copolymer (B3) is a propylene-α-olefin random copolymer (B3-1) or a propylene-ethylene-α-olefin random copolymer (B3-2) comprising (1) about 8 to 35% by mole of an α-olefin having not less than 4 carbon atoms, (2) about 5% by mole or less of an ethylene unit and (3) about 0.1 to 70% by weight of a cold xylene-soluble part;

the propylene block copolymer (B4) is a propylene block copolymer that can be obtained by forming in a first step about 40 to 85% by weight, based on the total polymerization amount (sum of the component b1 and the component b2 described below), of a propylene-ethylene copolymer component (component b1) having an ethylene unit content of about 1.5 to 6.0% by weight, and then forming in a second step about 15 to 60% by weight, based on the total polymerization amount (sum of the component b1 and the component b2), of a propylene-ethylene copolymer component (component b2) having an ethylene unit content of about 7 to 17% by weight, and having an intrinsic viscosity ($[\eta]2$) of the component b2 of about 2 to 5 dl/g and a ratio ($[\eta]2/[\eta]1$) of the intrinsic viscosity ($[\eta]2$) the component b2 to an intrinsic viscosity ($[\eta]1$) of the component b1 of about 0.5 to 1.8.

11. A bag comprising a fused polyolefin laminate according to claim 9.

12. A bag comprising a fused polyolefin laminate according to claim 10.